(19) Europäisches Patentamt
European Patent Office
Office européen des brevets

(11) **EP 2 721 293 B1**

(12) **FASCICULE DE BREVET EUROPEEN**

(45) Date de publication et mention
de la délivrance du brevet:
**29.07.2020 Bulletin 2020/31**

(51) Int Cl.:
***F03D 3/06*** *(2006.01)*      ***F03D 7/06*** *(2006.01)*
***F03D 7/04*** *(2006.01)*

(21) Numéro de dépôt: **12728490.9**

(22) Date de dépôt: **14.06.2012**

(86) Numéro de dépôt international:
**PCT/EP2012/061363**

(87) Numéro de publication internationale:
**WO 2012/172022 (20.12.2012 Gazette 2012/51)**

(54) **EOLIENNE A AXE VERTICAL AVEC DISPOSITIF DE FREINAGE**

WINDTURBINE MIT VERTIKALER ACHSE MIT BREMSVORRICHTUNG

VERTICAL AXIS WIND TURBINE WITH BRAKING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.06.2011 BE 201100360**

(43) Date de publication de la demande:
**23.04.2014 Bulletin 2014/17**

(73) Titulaire: **Fairwind S.A.**
**7180 Seneffe (BE)**

(72) Inventeur: **DEBLESER, Yves**
**B-7062 Naast (BE)**

(74) Mandataire: **ABYOO**
**Centre Monnet**
**Avenue Jean Monnet 1**
**1348 Louvain-La-Neuve (BE)**

(56) Documents cités:
**EP-A2- 2 623 774          WO-A1-2010/102459
WO-A1-2010/131376      WO-A2-2010/108120
WO-A2-2010/109213      DE-A1- 3 147 236
US-A- 4 204 805          US-A- 4 456 429
US-A- 4 952 119**

## Description

### Domaine technique

Selon un premier aspect, l'invention se rapporte à un dispositif de freinage pour éolienne à axe vertical et de manière plus précise pour une éolienne à axe vertical de type Darrieus. Selon un deuxième aspect, l'invention se rapporte à une éolienne à axe vertical comprenant un tel dispositif de freinage.

### Etat de la technique

Il existe deux grandes familles d'éoliennes : les éoliennes à axe horizontal et les éoliennes à axe vertical. Les éoliennes à axe vertical présentent certains avantages par rapport aux éoliennes à axe horizontal comme par exemple, une faible dépendance de leur efficacité par rapport à la direction du vent. Les éoliennes à axe vertical sont divisées en deux catégories : Savonius (principe de trainée différentielle) et Darrieus. Pour la catégorie d'éolienne Darrieus, un couple moteur permettant d'entraîner un rotor d'un générateur de courant résulte de la variation de l'angle d'incidence et donc de la portance s'exerçant sur une pale d'une telle éolienne lors d'une révolution complète de la pale autour de l'axe vertical de l'éolienne.

Afin de protéger une éolienne contre des risques de rupture lorsque la vitesse de vent est importante, il est nécessaire de prévoir des systèmes permettant de réduire ou de limiter la vitesse de rotation des pales, voire de stopper complètement cette rotation. Dans le brevet EP1857671, des aérofreins de petite taille montés près du bord de fuite des pales sont proposés pour limiter la vitesse de rotation des pales d'une éolienne à axe vertical de type Darrieus. Ces aérofreins peuvent être activés par force centrifuge. De tels dispositifs ne présentent pas une grande fiabilité car ces aérofreins peuvent ne pas s'enclencher, notamment lors de conditions de givre sévères. De tels aérofreins étant légers, la force centrifuge qui s'exerce sur ces aérofreins n'est en effet pas très importante et peut être inférieure à la force qui empêcherait les aérofreins de pivoter suite à la présence de givre par exemple. Le brevet US4456429 décrit un autre mécanisme de contrôle de vitesse pour éolienne à axe vertical de type Darrieus. Les pales d'une telle éolienne sont reliées à un axe vertical par l'intermédiaire de bras (ou barres) horizontaux (référence 17 de la figure 1 de ce brevet). Un mécanisme d'articulation (typiquement une charnière) assure la connexion entre les pales et ces bras non-verticaux. Lorsque la vitesse de rotation des pales autour de l'axe vertical augmente, elles peuvent pivoter d'une position nominale (pour laquelle les pales sont perpendiculaires à leurs bras respectifs) vers une position pour laquelle elles créent une trainée plus importante, ce qui réduit et/ou limite leur vitesse de rotation autour de l'axe vertical. Des ressorts restaurent les pales dans leur position nominale quand la vitesse de rotation des pales diminue. Le document US4204805 décrit une autre éolienne de l'état de la technique.

Les systèmes tels que décrit dans le brevet US4456429 présentent certains inconvénients. Vu la présence et le type de mécanisme d'articulation reliant les pales au bras horizontaux, il se peut que les pales, après avoir subi une déflection brusque par rapport à ces bras horizontaux, qui serait induite par un changement rapide de la vitesse du vent par exemple, décrivent des mouvements de battement par rapport à ces bras horizontaux. Il s'ensuit que l'éolienne devient alors instable et que les pales peuvent continuer à tourner autour de l'axe vertical malgré un vent violent tout en pivotant par rapport aux bras horizontaux. L'instabilité résultante de l'éolienne peut induire des efforts mécaniques importants sur les éléments de l'éolienne qui risque alors de casser. Il serait donc souhaitable d'avoir un système de freinage pour éolienne à axe vertical plus efficace et plus stable.

### Résumé de l'invention

L'invention est définit dans les revendications annexées.

Un limiteur de couple est connu de l'homme du métier. Une fois le limiteur de couple déclenché, le volet reste dans une position de basculement imposée par le limiteur de couple. La position de basculement correspondant à la position du volet une fois qu'il a basculé à partir de sa position nominale. Il est donc impossible que le volet pivote autour de l'axe de basculement par la suite, c'est-à-dire une fois le limiteur de couple déclenché. Le système de freinage de l'invention est donc plus stable. Grâce à ce limiteur de couple, il n'y a pas besoin de systèmes d'amortissement additionnels pour atténuer des éventuels mouvements de battement des pales. Le volet étant bloqué dans une position de basculement donnée une fois la vitesse de rotation maximale atteinte, la traînée additionnelle imposée par cette nouvelle position du volet (la position de basculement) est constante. Le système de l'invention est donc plus efficace. Il permet également d'avoir un freinage d'urgence, ce qui est utile dans certaines conditions extrêmes. Contrairement au dispositif décrit dans le brevet US4456429, une fois basculé, le volet ne revient pas seul à sa position de fonctionnement nominale quand la vitesse de rotation de l'éolienne diminue suite au basculement du volet dans la position de basculement. Le limiteur de couple le maintient dans la position correspondant à une augmentation de la traînée (position de basculement). Ainsi, le limiteur de couple de l'invention est également apte à maintenir le volet dans la position de basculement pour une vitesse de rotation dudit volet autour de l'axe vertical inférieure à la vitesse de rotation maximale (vitesse pour laquelle le volet bascule dans la position de basculement à partir de sa position nominale). Le limiteur de couple de l'invention n'a pas la fonction unique d'une charnière qui est simplement un organe de guidage pour un mouvement de rotation. Le limiteur de couple permet le basculement mais en plus contrôle le déclenchement grâce à son couple de déclenchement, c'est-à-dire le seuil de l'effort à fournir pour provoquer le basculement. Le limiteur de couple de l'invention permet aussi un basculement contrôlé dans son amplitude et prédéterminé (360°, 180°, 90° par exemple).

Le dispositif de freinage de l'invention a d'autres avantages. Lorsqu'une vitesse de rotation maximale est atteinte, le dispositif de freinage de l'invention induit un basculement brusque du volet autour de l'axe de basculement suite au couple exercé sur le limiteur de couple par la force centrifuge s'exerçant au centre de gravité du volet. Ce limiteur de couple ne se déclenche et donc ne permet un basculement brusque du volet que lorsqu'un couple au niveau dudit limiteur est supérieur ou égal au couple de déclenchement. La distance entre le centre de gravité du volet et l'axe de basculement représente un bras de levier. Le fait que le limiteur de couple ne se déclenche que pour une valeur de couple prédéterminée permet d'avoir un dispositif de freinage plus fiable par rapport aux dispositifs tels que décrit dans US4456429 où un simple mécanisme d'articulation est utilisé. D'autre part, une déflection progressive des pales par rapport à leur position nominale conduit à une augmentation progressive de la trainée qu'elles induisent et donc une diminution des performances de l'éolienne associée même si une vitesse de rotation maximale n'est pas atteinte. Ceci n'est pas le cas pour le dispositif de freinage de l'invention qui ne modifie les performances aérodynamiques de l'éolienne associée qu'une fois qu'une vitesse de vent maximale est atteinte. Le dispositif de freinage de l'invention s'enclenche par la seule présence d'une force centrifuge induite par la rotation des pales autour de l'axe vertical. Aucun dispositif de contrôle hydraulique, électronique, et/ou mécanique n'est nécessaire pour contrôler le déclenchement du dispositif de freinage ou pour induire un basculement du volet dans la position de basculement. Ainsi, il n'est pas nécessaire par exemple de prévoir des câbles ou tiges permettant d'induire un basculement du volet du dispositif de freinage. Cela permet d'avoir un dispositif de freinage fiable et autonome. Le dispositif de freinage de l'invention est également bon marché. Si l'éolienne à laquelle le dispositif de freinage de l'invention comprend trois pales, on peut y placer trois volets. Ainsi, par la redondance des trois volets, on augmente d'autant plus la fiabilité du dispositif de freinage.

Grâce au dispositif de freinage de l'invention, la vitesse de rotation maximale des pales autour de l'axe vertical d'une éolienne à axe vertical est limitée et donc les contraintes qu'elles subissent sont également limitées. s'ensuit qu'un large éventail de matériaux peut être utilisé pour la construction des pales quand une valeur limite de rotation est choisie de manière adéquate. Le dispositif de freinage de l'invention peut typiquement être utilisé pour des éoliennes de type Darrieus à pales verticales et droites, appelées parfois éoliennes de type Darrieus à rotor en H.

De manière préférée, l'axe de basculement est parallèle à l'axe vertical.

Dans une autre version préférée, l'éolienne à axe vertical comprend au moins une pale reliée mécaniquement à l'arbre rotatif vertical par le bras non-vertical et le volet est une partie de l'au moins une pale. Le volet du dispositif de freinage de l'invention est alors typiquement plus lourd que les aérofreins décrits dans le brevet EP1857671 ce qui permet son basculement même en condition de givre et/ou de gel intense. De plus, le givre qui pourrait naître sur le volet de l'invention augmenterait sont poids ce qui conduirait à un déclenchement plus précoce de celui-ci. Préférentiellement, ladite partie de l'au moins une pale est connectée mécaniquement à la partie mobile dudit limiteur de couple à une extrémité de ladite au moins une pale. De manière encore préférée, ladite extrémité correspond à une extrémité basse de ladite au moins une pale.

Dans un autre mode de réalisation, l'éolienne à axe vertical comprend au moins une pale reliée mécaniquement à l'arbre rotatif vertical par le bras non-vertical et le volet est une de ladite moins une pale.

Préférentiellement, l'angle de basculement vaut 90°.

Dans un autre mode de réalisation préféré, l'éolienne à axe vertical comprend au moins une pale reliée mécaniquement à l'arbre rotatif vertical par le bras non-vertical, la pale est située à une extrémité dudit bras non-vertical en-dehors de l'axe vertical et le volet est positionné entre l'axe vertical et ladite extrémité.

L'invention se rapporte à une éolienne à axe vertical comprenant un dispositif de freinage tel que décrit dans les paragraphes précédents. Dans une version préférée, l'invention se rapporte à une éolienne comprenant trois dispositifs de freinage tels que décrit dans les paragraphes précédents.

**Brève description des dessins**

Ces aspects ainsi que d'autres aspects de l'invention seront clarifiés dans la description détaillée de modes de réalisation particuliers de l'invention, référence étant faite aux dessins des figures, dans lesquelles:

- la Fig.1 montre une vue du dessus d'une éolienne à axe vertical lorsque des volets du dispositif de freinage de l'invention sont dans une position nominale;
- la Fig.2 montre un exemple de pale à profil symétrique sur laquelle s'applique une portance suite à la présence d'une vitesse de vent relative non nulle ;
- la Fig.3 montre une vue du dessus d'une éolienne à axe vertical lorsque des volets du dispositif de freinage de l'invention ont basculé d'un angle de basculement par rapport à leur position nominale;
- la Fig.4 montre un exemple de volet du dispositif de freinage de l'invention avant et après basculement d'un angle de basculement égal à 90°;
- la Fig.5 montre l'évolution d'un angle de basculement d'un limiteur de couple en fonction du couple qu'il subit ;

- la Fig.6 montre un exemple de mode de réalisation du dispositif de freinage lorsque le volet est un morceau de pale ;
- la Fig.7 montre une vue de coupe d'une partie d'une éolienne à axe vertical lorsque le dispositif de freinage est actif.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

## Description détaillée de certains modes de réalisation de l'invention

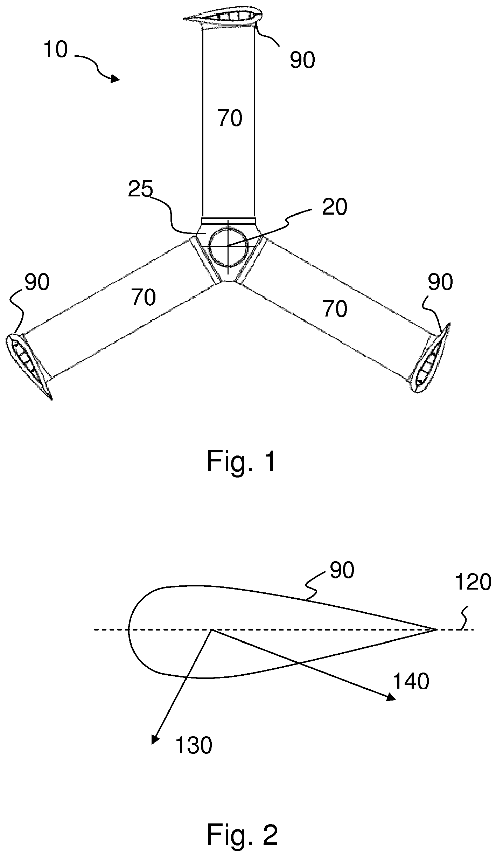

La figure 1 montre un exemple d'éolienne 10 à axe vertical 20 vue du dessus lorsque le dispositif de freinage de l'invention n'est pas actif. Trois pales 90 décalées l'une par rapport à l'autre de 120° sont reliées à un arbre rotatif vertical 25 par l'intermédiaire de bras non-verticaux 70 (ou barres), préférentiellement horizontaux. L'arbre rotatif vertical 25 a un axe de rotation qui coïncide avec l'axe vertical 20. Lorsqu'un vent 180 de vitesse non nulle est incident à ces pales 90, un mouvement de rotation autour de l'axe vertical 20 leur est imprimé. Les pales 90 peuvent alors entraîner la rotation d'un rotor d'un générateur pour produire de la puissance électrique par exemple. Ce mouvement de rotation provient du profil des pales 90 (typiquement profil en 'aile d'avion') et de la présence d'une force résultante non nulle s'appliquant sur l'ensemble des pales 90. Ces aspects sont connus de l'homme du métier et sont à la base des éoliennes à axe vertical de type Darrieus. La connaissance des différentes forces s'exerçant sur les pales 90 permet de déterminer le couple moteur développé par une éolienne à axe vertical de type Darrieus. La force développée sur une pale 90 peut être décomposée en deux composantes : une portance 130 qui est perpendiculaire à une vitesse relative 140 du vent 180 par rapport à la pale considérée et une traînée qui est parallèle et de même sens que cette vitesse relative 140. La vitesse relative 140 dépend de la vitesse d'entraînement de chaque pale 90 suite à son mouvement de rotation autour de l'axe vertical 20. Pour un profil symétrique de pale 90 (profil NACA0018 par exemple), le point d'application de la portance 130 et de la traînée (centre de force) se trouve sur la corde du profil à environ un quart de la longueur de la corde par rapport au bord d'attaque. La figure 2 montre un exemple de profil de pale 90 symétrique avec la vitesse relative 140 et la portance 130 pour une direction de vent donnée. Les amplitudes de la portance 130 et de la traînée 170 s'exerçant sur chaque pale 90 pour une vitesse et une direction de vent données peuvent être calculées à l'aide de coefficients adimensionnels de portance et de traînée qui sont fonction de l'angle d'attaque du vent et du nombre de Reynolds notamment. Ces calculs sont connus de l'homme du métier, voir par exemple l'ouvrage de I. Paraschivoiu intitulé: « Wind Turbine Design With Emphasis on Darrieus Concept », Polytechnic International Press, 2002.

Dans la configuration montrée à la figure 1, les différentes pales 90 sont positionnées de manière telle à induire une traînée due à leur mouvement de rotation autour de l'axe vertical 20 qui est minimale. De manière préférée, les bras 70 (ou barres) ont un profil en aile d'avion tel que la trainée 170 qu'ils imposent par le mouvement de rotation autour de l'axe vertical 20 est minimale. De manière encore préférée, les bras non-verticaux 70 ont la même forme que les pales 90. Les bras non-verticaux 70 ne doivent pas nécessairement être horizontaux. Dans un mode préféré, ces bras 70 sont obliques et donc non perpendiculaires par rapport à l'axe vertical 20. Différents types de matériaux peuvent être utilisés pour réaliser les pales 90 et les bras non-verticaux 70 dont certains exemples sont : le métal, le bois, le plastique, les fibres de verre.

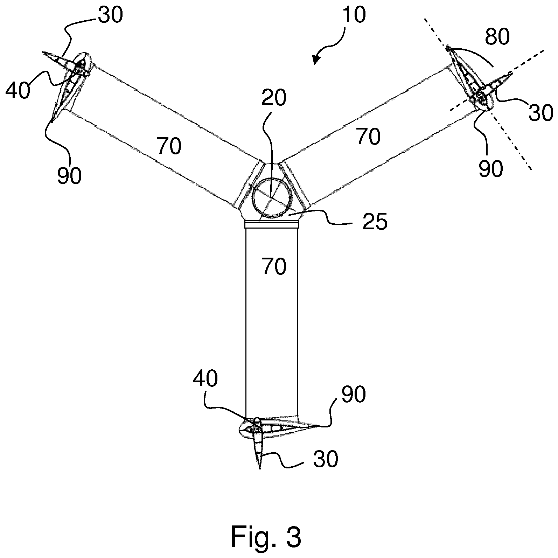

La figure 3 montre un exemple d'éolienne 10 à axe vertical 20 vue du dessus lorsque le dispositif de freinage de l'invention est actif. Le dispositif de freinage comprend un ou des limiteurs de couple 60 et chacun de ceux-ci comprend une partie fixe 150 et une partie mobile 160 par rapport aux bras non-verticaux 70. Le ou les volets 30 du dispositif de freinage sont mécaniquement reliés à la (ou les) partie(s) mobile(s) 160 du (ou des) limiteur(s) de couple 60. Grâce à ces limiteurs de couple 60 (non représentés à la figure 3), les volets 30 sont aptes à basculer d'un angle de basculement 80 autour d'un axe de basculement 40 lorsqu'une vitesse de rotation maximale des volets 30 autour de l'axe vertical 20 est atteinte. Dans le mode de réalisation préféré qui est présenté à la figure 3, les volets 30 ont basculé d'un angle de basculement 80 égal à 90° autour de l'axe de basculement 40 ; ils sont dans dans une position de basculement. Suite à ce basculement, la traînée 170 induite par les volets 30 lors de leur mouvement de rotation autour de l'axe vertical 20 devient importante ce qui permet de freiner voire d'arrêter le mouvement de rotation des pales 90 autour de l'axe vertical 20. Dans la version préférée illustrée à la figure 3, les volets 30 appliquent un couple de freinage avec un bras de levier relativement important. Ce bras de levier est le rayon de l'éolienne qui varie généralement entre trois et cinq mètres. Ce grand bras de levier permet de réduire la force résultante à appliquer pour freiner l'éolienne et ainsi d'alléger les contraintes au niveau des matériaux de dispositif de freinage. Une configuration telle que montrée à la figure 3 est préférable par rapport à un système de freinage au centre tel qu'un système de frein à disques par exemple pour lequel le bras de levier est plus petit et donc les contraintes au niveau des matériaux plus grandes.

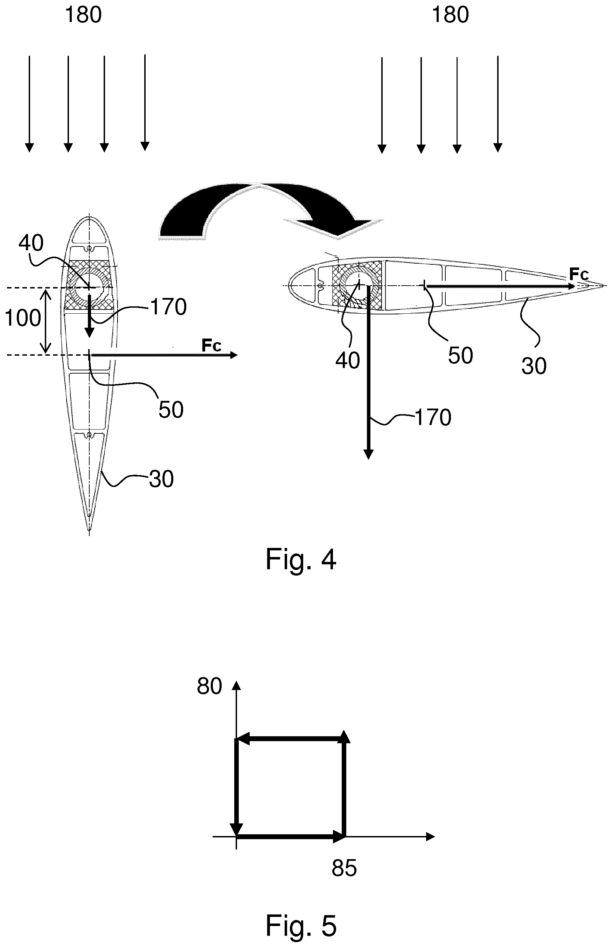

La figure 4 montre un volet 30 du dispositif de freinage avant (partie gauche) et après (partie droite) basculement d'un angle de basculement 80 pour une direction de vent 180 donnée. La figure 4 correspond à un mode de réalisation préféré correspondant à un angle de basculement 80 égal à 90°. Avant basculement (partie gauche de la figure 4), le volet 30 se trouve dans une position nominale. Lorsque le volet 30 est en rotation autour de l'axe vertical 20, une force centrifuge $\overrightarrow{F_C}$ s'applique au centre de gravité 50 du volet 30. La position nominale est telle qu'une force centrifuge $\overrightarrow{F_C}$ induite par la rotation du volet 30 autour de l'axe vertical 20 et s'exerçant au centre de gravité 50 du volet 30 est apte à créer un couple non nul par rapport à l'axe de basculement 40 dans cette position nominale. Dans le cas particulier où l'axe vertical 20 et l'axe de basculement 40 sont coplanaires (axe vertical 20 sécant ou parallèle à l'axe de basculement 40), cela induit que le centre de gravité 50 (aussi référencé par la lettre G dans la suite) est alors situé en-dehors du plan défini par ces deux axes. Le terme couple employé ici est parfois appelé moment de force par l'homme du métier. Le couple C exercé par la force centrifuge $\overrightarrow{F_C}$ par rapport à l'axe de basculement 40 est donné par l'équation (Eq. 1) :

$$C = \left(\overrightarrow{PG} \times \overrightarrow{F_c}\right) \cdot \vec{u} \text{ (Eq. 1),}$$

où P est un point de l'axe de basculement 40, G est le centre de gravité 50 et $\vec{u}$ un vecteur unitaire selon l'axe de basculement 40. L'équation (Eq. 1) est un produit mixte ; le sigle × représente un produit vectoriel et le sigle un produit scalaire. La force centrifuge $\overrightarrow{F_C}$ est proportionnelle au carré de la vitesse de rotation du volet 30 autour de l'axe vertical 20. Ainsi, la force centrifuge $\overrightarrow{F_C}$ augmente quand la vitesse de rotation du volet 30 autour de l'axe vertical 20 augmente. De manière préférée, la position nominale correspond à une position induisant une trainée 170 due au mouvement de rotation du volet 30 autour de l'axe vertical 20 qui est minimale. A la figure 4, la longueur de la flèche représentant la traînée 170 augmente en passant de la position nominale (partie gauche de la figure 4) à la position de basculement (partie droite de la figure 4).

Le volet 30 est mécaniquement connecté à une partie mobile 160 d'un limiteur de couple 60 qui a un couple de déclenchement 85 donné. Différentes types de limiteur de couple 60 peuvent être utilisés pour le dispositif de freinage de l'invention. Par exemple, la gamme SK de la société SNT peut être utilisée. Lorsqu'un couple supérieur au couple de déclenchement 85 est appliqué à un limiteur de couple 60, ce dernier permet une rotation brusque d'un angle de basculement 80 donné d'un élément qui est connecté à sa partie mobile 160. De manière préférée, le limiteur de couple 60 de l'invention est centré sur l'axe de basculement 40. Pour le dispositif de freinage de l'invention, le limiteur de couple 60 peut induire un ou plusieurs angles de basculement 80 lorsque le couple C exercé par la force centrifuge par rapport à l'axe de basculement 40 (et donné par l'équation (Eq. 1)) est supérieur à un ou plusieurs couples de déclenchement 85. Les différentes positions de basculement peuvent en effet être caractérisées par différents couples de déclenchement 85. Dans une version préférée de l'invention, le limiteur de couple 60 est caractérisé par des angles de basculement 80 réguliers. Des angles de basculement 80 standards sont tous les 60° mais d'autres valeurs (30°, 90°, 120 ° par exemple) sont possibles. Le limiteur de couple 60 de l'invention est donc un limiteur de couple synchrone et pas un limiteur de couple à glissement. Un limiteur de couple à glissement se contente d'engendrer un basculement (ou de libérer le mouvement de rotation) sans contrôle de l'amplitude de basculement qui s'ensuit (la partie mobile du limiteur de couple devient folle car il n'y a plus de couple résistant). Cela n'est pas le cas pour le limiteur de couple 60 de l'invention qui a non seulement un couple de déclenchement prédéterminé mais aussi un angle de basculement 80 prédéterminé.

La partie droite de la figure 4 montre le volet 30 après déclenchement du limiteur de couple 60, c'est-à-dire après que la partie mobile 160 de ce dernier ait induit un basculement d'un angle de basculement 80 du volet 30. Dans cet exemple, l'angle de basculement 80 est égal à 90°. Il s'ensuit qu'alors, le couple exercé par la force centrifuge $\overrightarrow{F_C}$ par rapport à l'axe de basculement 40 est nul selon l'équation (Eq. 1). Dans ce mode préféré, il n'y a donc plus de risque de déclenchement du limiteur de couple 60 par la suite. Pour ce mode préféré, le volet 30 présente un angle d'incidence de 90° par rapport à un vecteur vitesse périphérique du volet 30 en rotation autour de l'axe vertical 20 ; il génère une trainée 170 maximale ce qui a pour conséquence d'appliquer un couple de freinage qui va diminuer la vitesse de rotation du volet 30 et donc de l'éolienne 10 autour de l'axe vertical 20. Dans d'autres modes de réalisation correspondant à un angle de basculement 80 inférieur à 90°, il subsiste un couple C exercé par $\overrightarrow{F_C}$ par rapport à l'axe de basculement 40 après basculement du volet 30 par rapport à sa position nominale. Ce couple C est cependant inférieur au couple exercé avant basculement car le bras de levier 100 est réduit après basculement. Une fois que le volet 30 a basculé, il est possible de le remettre (typiquement manuellement) dans sa position de fonctionnement nominale par ré enclenchement du limiteur de couple 60. Ainsi, pour remettre le volet 30 à sa position initiale après basculement, il faut généralement appliquer manuellement un couple supérieur ou égal au couple de déclenchement 85 dans le sens opposé au couple ayant induit le basculement. Quand l'angle de basculement 80 vaut 90°, il est possible d'induire un tour complet du volet 30 du dispositif de freinage en appliquant quatre fois un couple supérieur au couple de déclenchement 85 et appliqué chaque fois dans la même direction. Un fonctionnement typique d'un limiteur de couple 60 est illustré à la figure 5 qui montre l'angle de basculement 80 d'un limiteur de couple 60 en ordonnée en fonction du couple auquel il est soumis en abscisse pour un cycle complet. Au départ, l'angle de basculement 80 vaut zéro. Quand le couple appliqué au limiteur de couple 60 atteint le couple de déclenchement 85, l'angle de basculement 80 augmente brusquement. A partir de ce moment, la vitesse de l'éolienne 10 à axe vertical 20 diminue typiquement, réduisant la valeur du couple auquel est soumis le limiteur de couple 60. Par ramener l'angle de basculement 80 à sa valeur initiale (zéro à la figure 5), il est nécessaire de réenclencher le limiteur de couple 60. Le couple de déclenchement 85 est préférentiellement compris entre 100 et 400 Nm et de manière encore préférée, entre 265 et 300 Nm. De manière encore préférée, le couple de déclenchement 85 vaut 283 Nm. Dans une version préférée, le limiteur de couple 60 comprend une plage de réglage du couple de déclenchement 85 permettant de modifier la vitesse de rotation limite à laquelle le volet 30 bascule. De manière préférée, cette plage de réglage est comprise entre 220 Nm et 400 Nm. Préférentiellement, le limiteur de couple s'enclenche pour une vitesse de rotation du volet 30 autour de l'axe vertical 20 supérieure ou égale à 90 tours par minute, et de manière encore préférée, pour une vitesse de rotation du volet 30 supérieure à 120 tours par minute.

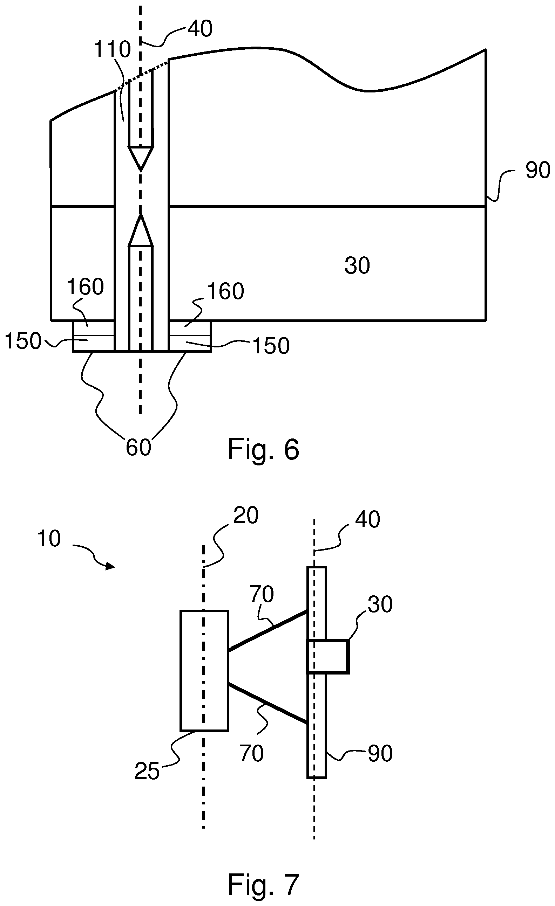

La figure 6 montre un mode préféré de réalisation du dispositif de freinage de l'invention où le volet 30 est une partie d'une pale 90 d'une éolienne à axe vertical 20. Dans l'exemple montré à la figure 6, le volet 30 qui est une partie de la pale 90 est connectée à un limiteur de couple 60 à une extrémité basse de la pale 90. De manière plus précise, le volet 30 est connecté à une partie mobile 160 du limiteur de couple 60 par rapport au bras non-vertical 70 (non représenté à la figure 6). Le limiteur de couple 60 comprend également une partie fixe 150 par rapport à ce même bras non-vertical 70. D'autres configurations sont possibles. Ainsi le volet 30 qui est une partie de pale 90 peut être connecté à la partie mobile 160 d'un limiteur de couple 60 à une extrémité haute d'une pale 90. De manière préférée, plusieurs volets 30 sont associés à une seule pale 90 constituant alors différents morceaux d'une même pale 90. Ces différents volets 30 peuvent être mécaniquement connectés à une même partie mobile 160 d'un limiteur de couple 60. Quand deux volets 30 sont associés à une même pale 90, ils sont préférentiellement positionnés chacun à une extrémité différente (extrémité haute et extrémité basse) de la pale 90. A la figure 6, le limiteur de couple 60 est monté sur un tube cylindrique 110 positionné autour de l'axe de basculement 40. De manière préférée, le tube cylindrique 110 permet de fixer le volet 30 à l'autre partie de la pale 90 par l'intermédiaire d'un fourreau solidaire de cette autre partie de pale 90. Pour guider de manière appropriée le volet 30, celui-ci est préférentiellement équipé d'un matériau antifriction. Une modification de la hauteur du volet 30 permet de modifier la puissance de freinage. Plus le volet est haut plus le freinage sera important car la trainée est alors plus forte. Dans un mode de réalisation où le volet 30 est une partie d'une pale 90 d'une éolienne 10 à axe vertical 20, la hauteur du volet 30 est préférentiellement comprise entre 200 mm et 1 m. De manière encore préférée et pour un même mode de réalisation de l'invention, la hauteur du volet 30 est choisie égale à 1/16 de la hauteur d'une pale 90. Ainsi, dans le cas d'une pale F64-10 (8 mètres de hauteur), la hauteur du volet 30 sera préférentiellement choisie égale à 500 mm. Pour une pale F16-05 (4 m de hauteur), la hauteur du volet 30 sera préférentiellement choisie égale à 250 mm.

Dans un autre mode de réalisation, le volet 30 est une pale 90 d'une éolienne 10 à axe vertical. Ainsi, dans ce cas, le freinage est assuré par le basculement d'une pale 90 entière.

Selon un deuxième aspect, l'invention se rapporte à une éolienne 10 à axe vertical 20 comprenant un dispositif de freinage tel que décrit ci-dessus. Préférentiellement, ladite éolienne 10 à axe vertical 20 comprend des pales 90 verticales et droites ; une telle éolienne 10 est parfois référencée par l'homme du métier par la dénomination « éolienne Darrieus à rotor en H ». La figure 7 montre une coupe d'une partie d'une éolienne 10 à axe vertical 20 selon un mode préféré de ce deuxième aspect de l'invention. Dans cette figure 7, le dispositif de freinage est supposé être actif, c'est-à-dire que le volet 30 est supposé avoir basculé. Dans le mode de réalisation préféré montré à la figure 7, les bras non-verticaux 70 sont obliques et le volet 30 est situé sur la pale 90. Dans ce mode de réalisation préféré, le volet 30 est en fait situé au milieu de la hauteur de la pale 90, entre les fixations de cette pale 90 aux deux bras non-verticaux 70. Dans un autre mode de réalisation préféré, les volets 30 sont situés sur les bras non-verticaux 70, entre l'axe vertical 20 et les extrémités de ceux-ci auxquelles sont mécaniquement connectées les pales 90. Quand l'éolienne 10 ne comprend qu'une seule pale 90, celle-ci est préférentiellement contrebalancée d'une manière appropriée pour permettre une rotation souple de la pale 90 autour de l'axe vertical 20. Quand l'éolienne comprend plusieurs pales 90, par exemple trois, l'éolienne comprend alors préférentiellement un nombre égal de volets 30, trois dans cet exemple.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. En particulier, l'invention concerne également les combinaisons des caractéristiques techniques des modes de réalisation énoncés plus haut. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Eolienne (10) à axe vertical (20) comprenant :

   - un bras non-vertical (70) ;
   - un arbre rotatif vertical (25) ayant un axe de rotation coïncidant avec ledit axe vertical (20) ;
   - un dispositif de freinage comprenant un volet (30), ledit volet (30):

      • étant relié mécaniquement par ledit bras non-vertical (70) audit arbre rotatif vertical (25);
      • étant apte à tourner autour dudit axe vertical (20) dans une position nominale et à basculer autour d'un axe de basculement (40) non-horizontal ;
      • ayant un centre de gravité (50) positionné en-dehors de l'axe de basculement (40),

   ladite position nominale étant telle qu'une force centrifuge induite par la rotation dudit volet (30) autour dudit axe vertical (20) et s'exerçant audit centre de gravité (50) est apte à créer un couple non nul par rapport audit axe de basculement (40) dans cette position nominale,

      - le dispositif de freinage comprenant en outre un limiteur de couple (60) ayant un couple de déclenchement (85) prédéterminé, une partie fixe (150) et une partie mobile (160) par rapport au bras non-vertical (70);
      - le volet (30) étant connecté mécaniquement à ladite partie mobile (160) dudit limiteur de couple (60) ;
      - ladite partie mobile (160) du limiteur de couple (60) étant apte à permettre un basculement du volet (30) à partir de la position nominale d'un angle de basculement (80) prédéterminé autour de l'axe de basculement (40) dans une position de basculement lorsqu'une vitesse de rotation maximale du volet (30) autour de l'axe vertical (20) est atteinte induisant un couple au niveau du limiteur de couple (60) qui est supérieur au couple de déclenchement (85) par l'action d'une force centrifuge s'exerçant au centre de gravité (50) du volet (30) dans la position nominale ; **caractérisée en ce que**
      - ledit limiteur de couple (60) est apte à maintenir le volet (30) dans ladite position de basculement pour une vitesse de rotation dudit volet (30) autour de l'axe vertical (20) inférieure à ladite vitesse de rotation maximale.

2. Eolienne (10) à axe vertical (20) selon la revendication 1 **caractérisée en ce que** l'axe de basculement (40) est parallèle à l'axe vertical (20).

3. Eolienne (10) à axe vertical (20) selon l'une quelconque des revendications précédentes **caractérisée en ce que** l'éolienne (10) à axe vertical (20) comprend au moins une pale (90) reliée mécaniquement à l'arbre rotatif vertical (25) par le bras non-vertical (70) et **en ce que** le volet (30) est une partie de l'au moins une pale (90).

4. Eolienne (10) à axe vertical (20) selon la revendication 3 **caractérisée en ce que** ladite partie de l'au moins une pale (90) est connectée mécaniquement à la partie mobile (160) dudit limiteur de couple (60) à une extrémité de ladite au moins une pale (90).

5. Eolienne (10) à axe vertical (20) selon la revendication 4 **caractérisée en ce que** ladite extrémité correspond à une extrémité basse de ladite au moins une pale (90).

6. Eolienne (10) à axe vertical (20) selon la revendication 1 ou 2 **caractérisée en ce que** l'éolienne (10) à axe vertical (20) comprend au moins une pale (90) reliée mécaniquement à l'arbre rotatif vertical (25) par le bras non-vertical (70) et **en ce que** le volet (30) est une de ladite moins une pale (90).

7. Eolienne (10) à axe vertical (20) selon l'une quelconque des revendications précédentes **caractérisée en ce que** l'angle de basculement (80) vaut 90°.

8. Eolienne (10) à axe vertical (20) selon la revendication 1 ou 2 **caractérisée en ce que** l'éolienne (10) à axe vertical (20) comprend au moins une pale (90) reliée mécaniquement à l'arbre rotatif vertical (25) par le bras non-vertical (70), **en ce que** la pale (90) est située à une extrémité dudit bras non-vertical (70) en-dehors de l'axe vertical (20) et **en ce que** le volet (30) est positionné entre l'axe vertical (20) et ladite extrémité.

9. Eolienne (10) à axe vertical (20) selon l'une quelconque des revendications précédentes comprenant trois dispositifs de freinage.

## Patentansprüche

1. Windrad (10) mit vertikaler Achse (20), umfassend:

   - einen nicht vertikalen Arm (70);
   - eine rotierende vertikale Welle (25) mit einer Rotationsachse, die mit der genannten vertikalen Achse (20) zusammenfällt;
   - eine Bremsvorrichtung, umfassend eine Klappe (30), wobei die genannte Klappe (30):

• mechanisch durch den genannten nicht vertikalen Arm (70) mit der genannten rotierenden vertikalen Welle (25) verbunden ist;

• geeignet ist, sich um die genannte vertikale Welle (20) in einer nominalen Position zu drehen und um eine nicht horizontale Kippachse (40) zu kippen;

• einen Schwerpunkt (50) aufweist, der außerhalb der Kippachse (40) positioniert ist,

wobei die genannte nominale Position derart ist, dass eine Zentrifugalkraft, die durch die Rotation der genannten Klappe (30) um die genannte vertikale Achse (20) induziert ist und auf den genannten Schwerpunkt (50) ausgeübt ist, geeignet ist, ein Moment ungleich null im Verhältnis zu der genannten Kippachse (40) in dieser nominalen Position zu schaffen,

- wobei die Bremsvorrichtung darüber hinaus einen Drehmomentbegrenzer (60) umfasst, der ein vorbestimmtes Auslösemoment (85), einen festen Teil (150) und einen beweglichen Teil (160) im Verhältnis zum nicht vertikalen Arm (70) umfasst;

- wobei die Klappe (30) mechanisch an den genannten beweglichen Teil (160) des genannten Drehmomentbegrenzers (60) angeschlossen ist;

- wobei der genannte bewegliche Teil (160) des Drehmomentbegrenzers (60) geeignet ist, ein Kippen der Klappe (30) ausgehend von der nominalen Position eines vorbestimmten Kippwinkels (80) um die Kippachse (40) in einer Kippposition zuzulassen, wenn eine maximale Rotationsgeschwindigkeit der Klappe (30) um die vertikale Achse (20) erreicht ist, die ein Drehmoment am Drehmomentbegrenzer (60) induziert und die größer ist als das Auslösemoment (85) durch die Wirkung einer Zentrifugalkraft, die auf den Schwerpunkt (50) der Klappe (30) in der nominalen Position ausgeübt ist; **dadurch gekennzeichnet, dass**

- der genannte Drehmomentbegrenzer (60) geeignet ist, die Klappe (30) in der genannten Kippposition für eine Rotationsgeschwindigkeit der genannten Klappe (30) um die vertikale Achse (20) zu halten, die kleiner ist als die genannte maximale Rotationsgeschwindigkeit.

2. Windrad (10) mit vertikaler Achse (20) gemäß Anspruch 1, **dadurch gekennzeichnet, dass** die Kippachse (40) parallel zur vertikalen Achse (20) ist.

3. Windrad (10) mit vertikaler Achse (20) gemäß irgendeinem der voranstehenden Ansprüche, **dadurch gekennzeichnet, dass** das Windrad (10) mit vertikaler Achse (20) wenigstens einen Flügel (90) umfasst, der mechanisch mit der vertikalen rotierenden Welle (25) durch den nicht vertikalen Arm (70) verbunden ist und dass die Klappe (30) ein Teil des wenigstens einen Flügels (90) ist.

4. Windrad (10) mit vertikaler Achse (20) gemäß Anspruch 3, **dadurch gekennzeichnet, dass** der genannte Teil des wenigstens einen Flügels (90) mechanisch an den beweglichen Teil (160) des genannten Drehmomentbegrenzers (60) an einem Ende des wenigstens einen Flügels (90) angeschlossen ist.

5. Windrad (10) mit vertikaler Achse (20) gemäß Anspruch 4, **dadurch gekennzeichnet, dass** das genannte Ende einem unteren Ende des genannten wenigstens einen Flügels (90) entspricht.

6. Windrad (10) mit vertikaler Achse (20) gemäß Anspruch 1 oder 2, **dadurch gekennzeichnet, dass** das Windrad (10) mit vertikaler Achse (20) wenigstens einen Flügel (90) umfasst, der mechanisch an die vertikale rotierende Achse (25) durch den nicht vertikalen Arm (70) verbunden ist und dass die Klappe (30) einer des wenigstens einen Flügels (90) ist.

7. Windrad (10) mit vertikaler Achse (20) gemäß irgendeinem der voranstehenden Ansprüche, **dadurch gekennzeichnet, dass** der Kippwinkel (80) 90° beträgt.

8. Windrad (10) mit vertikaler Achse (20) gemäß Anspruch 1 oder 2, **dadurch gekennzeichnet, dass** das Windrad (10) mit vertikaler Achse (20) wenigstens einen Flügel (90) umfasst, der mechanisch mit der vertikalen rotierenden Welle (25) durch den nicht vertikalen Arm (70) verbunden ist, dass der Flügel (90) an einem Ende des genannten nicht vertikalen Arms (70) außerhalb der vertikalen Achse (20) angeordnet ist und dass die Klappe (30) zwischen der vertikalen Achse (20) und dem genannten Ende positioniert ist.

9. Windrad (10) mit vertikaler Achse (20) gemäß irgendeinem der voranstehenden Ansprüche, umfassend drei Bremsvorrichtungen.

**Claims**

1. Wind turbine (10) with a vertical axis (20) comprising:

- a non-vertical arm (70);
- a vertical rotating shaft (25) having an axis of rotation coinciding with said vertical axis (20);
- a braking device comprising a flap (30), said flap (30):

• being mechanically connected by said non-vertical arm (70) to said vertical rotating shaft (25);
• being able to rotate about said vertical axis (20) in a nominal position and to tilt about a non-horizontal tilting axis (40);
• having a centre of gravity (50) positioned outside the tilting axis (40),

the said nominal position being such that a centrifugal force induced by the rotation of the said flap (30) about the said vertical axis (20) and exerted at the said centre of gravity (50) is capable of creating a non-zero torque with respect to the said tilting axis (40) in this nominal position,

- the braking device further comprising a torque limiter (60) having a predetermined release torque (85), a fixed part (150) and a movable part (160) with respect to the non-vertical arm (70);
- the flap (30) being mechanically connected to said movable part (160) of said torque limiter (60);
- said mobile part (160) of the torque limiter (60) being capable of allowing the flap (30) to be tilted from the nominal position by a predetermined tilting angle (80) about the tilting axis (40) into a tilting position when a maximum speed of rotation of the flap (30) about the vertical axis (20) is reached, inducing a torque at the torque limiter (60) which is greater than the release torque (85) by the action of a centrifugal force acting on the centre of gravity (50) of the flap (30) in the nominal position; **characterised in that**
- said torque limiter (60) is capable of maintaining the flap (30) in said tilting position for a speed of rotation of said flap (30) about the vertical axis (20) lower than said maximum speed of rotation.

2. A wind turbine (10) with a vertical axis (20) according to claim 1, **characterised in that** the tilting axis (40) is parallel to the vertical axis (20).

3. A wind turbine (10) with a vertical axis (20) according to any one of the preceding claims **characterised in that** the wind turbine (10) with a vertical axis (20) comprises at least one blade (90) mechanically connected to the vertical rotating shaft (25) by the non-vertical arm (70) and **in that** the flap (30) is a part of at least one blade (90).

4. A wind turbine (10) with a vertical axis (20) according to claim 3 **characterised in that** said part of at least one blade (90) is mechanically connected to the movable part (160) of said torque limiter (60) at one end of said at least one blade (90).

5. A wind turbine (10) with a vertical axis (20) according to claim 4 **characterised in that** said end corresponds to a lower end of said at least one blade (90).

6. A wind turbine (10) with a vertical axis (20) according to claim 1 or 2, **characterised in that** the wind turbine (10) with a vertical axis (20) comprises at least one blade (90) mechanically connected to the vertical rotating shaft (25) by the non-vertical arm (70) and **in that** the flap (30) is one of said at least one blade (90).

7. A wind turbine (10) with a vertical axis (20) according to any of the preceding claims **characterised in that** the tilting angle (80) is 90°.

8. A wind turbine (10) with a vertical axis (20) according to claim 1 or 2, **characterised in that** the wind turbine (10) with a vertical axis (20) comprises at least one blade (90) mechanically connected to the vertical rotating shaft (25) by the non-vertical arm (70), **in that** the blade (90) is located at one end of said non-vertical arm (70) outside the vertical axis (20) and **in that** the flap (30) is positioned between the vertical axis (20) and said end.

9. A wind turbine (10) with a vertical axis (20) according to any of the preceding claims comprising three braking devices.

Fig. 1

Fig. 2

Fig. 3

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1857671 A
- US 4456429 A
- US 4204805 A

**Littérature non-brevet citée dans la description**

- **I. PARASCHIVOIU.** Wind Turbine Design With Emphasis on Darrieus Concept. Polytechnic International Press, 2002